# EUROPÄISCHE PATENTSCHRIFT

(11) **EP 1 401 888 B1**
(45) Veröffentlichungstag und Bekanntmachung des Hinweises auf die Patenterteilung: **05.08.2009**
(21) Anmeldenummer: 02771637.2
(22) Anmeldetag: 07.05.2002
(51) Int. Cl.: C08F 10/00, C08F 2/00, C08F 4/658, C08F 2/38

(54) **VERFAHREN ZUR HERSTELLUNG VON OLEFINPOLYMEREN SOWIE AUSGEWÄHLTE KATALYSATOREN**
METHOD FOR THE PRODUCTION OF OLEFIN POLYMERS AND SELECTED CATALYSTS
PROCEDE DE FABRICATION DE POLYMERES D'OLEFINES ET CATALYSEURS CHOISIS

(30) Priorität: 08.05.2001 DE 10122111
(43) Veröffentlichungstag der Anmeldung: 31.03.2004
(73) Patentinhaber: Ticona GmbH, 65451 Kelsterbach (DE)
(72) Erfinder: PAYER, Wolfgang, 46487 Wesel (DE); EHLERS, Jens, D-46499 Hamminkeln (DE)
(86) Internationale Anmeldenummer: PCT/EP2002/005026
(87) Internationale Veröffentlichungsnummer: WO 2002/094891

(56) Entgegenhaltungen:
- EP-A- 0 223 011
- US-A- 4 059 720
- US-A- 4 182 810
- US-A- 4 447 587

## Beschreibung

Die vorliegende Erfindung betrifft ein Verfahren zur Herstellung von Homo- und/oder Copolymeren von Olefinen, insbesondere von Ethylen mit hoher Molmasse durch Niederdruckpolymerisation.

Verfahren zur Polymerisation von Olefinen sind bereits vielfach beschrieben und werden großtechnisch in großem Maßstab durchgeführt. Die Herstellung derartiger Polymerer, beispielsweise von Polypropylen oder von Polyethylen, kann mittels Ziegler-Natta-Katalysatoren erfolgen.

Für die Herstellung sehr bewährt hat sich die Niederdruckpolymerisation von Olefinen mit Ziegler-Natta-Katalysatoren, d.h. Mischungen aus Verbindungen der IV. bis Vl. Nebengruppe des Periodensystems der Elemente mit metallorganischen Verbindungen der 1. bis III. Gruppe des Periodensystems. Dabei haben die Titansowie die Aluminiumalkyle bzw. die Aluminiumalkyl-halogenide die größte Bedeutung. Nach bewährten Verfahren werden die Ziegler-Natta-Katalysatoren durch Reduktion von Ti(lV)verbindungen, wie TiCl₄, oder Titansäureestem mit aluminiumorganischen Verbindungen hergestellt (DE-C-2 361 508, EP 0 645 403).

Eine höhere Katalysatoraktivität und damit eine verbesserte Polymerfarbe wird durch die Verwendung von MgCl₂ als Trägerkomponente erzielt. In US-A-6,114,271 ist beispielsweise die Umsetzung einer Grignardverbindung mit TiCl₄ beschrieben.

Führt man die Polymerisation in Suspension durch, so wird häufig eine Agglomeration der gebildeten Polymerteilchen und ein Absetzen als Belag an den Wänden des Reaktors beobachtet. Derartige Vorgänge sind unerwünscht, da sie den Wärmeübergang und dadurch die Durchsatzleistung beeinträchtigen; zudem können sie zu größeren Agglomeraten weiterwachsen, so daß der Produktaustrag - beeinträchtigt wird.

Es hat daher bereits zahlreiche Versuche gegeben, die Bildung von Polymeragglomeraten zu verhindern.

Aus der EP-A-0,005,215 ist ein Verfahren zur Herstellung von Olefinpolymeren bekannt, bei dem die Tendenz zur Agglomeration der Polymerpartikel durch Zusatz eines speziellen Antifoulingmittels verringert wird. Als Antifoulingmittel wird insbesondere das Produkt Stadis 450 vorgeschlagen, welches ein Polysulfon und ein polymeres Polyamin enthält. Derartige Zusammensetzungen sind in US-A-3,917,466 beschrieben.

In der EP-A-0,107,127 wird vorgeschlagen, die Tendenz zur Agglomeratbildung von Polyolefinpartikeln durch eine Kombination verschiedenster Maßnahmen zu verringern, wie dem Einsatz eines speziellen geträgerten Übergangsmetallkatalysators mit geringem Feinkornanteil, dem Einsatz besonders glatter Reaktorwände, der Wahl bestimmter Strömungsbedingungen im Reaktor und dem Zusatz einer antistatisch wirkenden Verbindung.

Aus der EP-A-0,068,257 sind hochaktive Ziegler-Natta-Katalysatoren bekannt. Diese werden durch Umsetzung eines Magnesiumalkoholates mit TiCl₄ erhalten. Mit diesen Katalysatoren läßt sich beispielsweise Polyethylen mit ultrahohem Molekulargewicht herstellen (nachstehend als "UHMW-PE" bezeichnet). Der Katalysator wird durch Zusatz einer aluminiumorganischen Verbindung aktiviert. Bei einer Konzentration von 1mmol Triisobutylaluminium/l wurden in Suspension bei einem Druck von 2,8 MPa und einer Temperatur von 75°C Polyethylenhomopolymer mit einer Molmasse von 2 x 10⁶ g/Mol hergestellt. Das Polymer zeichnet sich durch eine hohe Kerbschlagzähigkeit (nach ISO 11524-2) aus.

Die Belagbildung an den Wänden des Reaktors stellt verstärkt beim Einsatz hochaktiver Katalysatoren ein Problem dar, insbesondere bei der Herstellung von UHMW-PE. Die Polymerisationsanlage muß dann häufig abgestellt und gereinigt werden.

Die Wahrscheinlichkeit der Bildung von Polymeragglomeraten wird durch elektrostatische Wechselwirkung beträchtlich erhöht. Dieses Phänomen ist u.a. auch beim Umgang mit von Polymerpulvern bekannt. Aufgrund der Eigenschaft der Polymerpartikel als elektrischer Nichtleiter kommt es in pneumatischen Fördersystemen zu elektrostatischer Aufladung in einer elektrisch nicht leitenden Umgebung, die zu Wandbelägen und schließlich zur Verstopfung führen kann. Bei den Polymerisationsprozessen ist mit einer ähnlichen Erscheinung zu rechnen. Die Polyolefinpartikeln bewegen sich rasch in einem nicht leitenden Medium, wie dem Monomer in Gas- oder flüssiger Phase oder einem aliphatischen Kohlenwasserstoff und laden sich dadurch auf. Als Folge werden Polymeragglomerate und Polymerbeläge auf den Reaktorwandungen beobachtet. Die immobilisierten Polymer-Partikel wachsen zu einem fest anhaftenden Belag auf der Reaktorwand auf, der den Wärmeübergang signifikant beeinträchtigt. Dieser Belag muß mechanisch aus dem entleerten Reaktor entfernt werden.

Die Herstellung von Polyolefinen mit hohen Molekulargewichten, insbesondere von UHMW-PE, erfordert eine hohe Reinheit des gesamten Polymerisationssystems. Dadurch werden Nebenreaktionen vermieden, die den Aufbau von Molekülen mit besonders hoher Molmasse verhindern. Dadurch steigt die Katalysatoraktivität an, und die Bildung von Agglomeraten durch sogenannte "hot-spots" wird relevant.

Aus der EP-A-0,645,403 ist ein Verfahren zur Herstellung von UHMW-PE bekannt, bei dem das Produkt mit Hilfe von ausgewählten und hochaktiven Ziegler-Natta-Katalysatoren im Rührkesselreaktor erhalten wird.

Ausgehend von diesem Stand der Technik bestand nun die Aufgabe, ein Verfahren zur Herstellung von Polyolefinen bereitzustellen, bei dem einerseits hochaktive Katalysatoren zum Einsatz kommen, mit denen Polymere hohen Molekulargewichts hergestellt werden können und gleichzeitig die Belag- und Agglomeratbildung stark vermindert wird.
US 4182810, EP-A-0223011 und US A 4059720 beschreiben noch Weitere Verfahren zur Herstellung von Poyolefinen, bei denen die Belag- und Agglomeratbildung vermindert wird.

Die vorliegende Erfindung betrifft ein Verfahren zur Herstellung von Olefin-Homo-oder -Copolymeren durch Polymerisation von mindestens einem Olefin in einem Kohlenwasserstoff oder einem Gemisch von Kohlenwasserstoffen in Gegenwart - eines Molmassereglers, eines Mischkatalysators, und einer die elektrische Leitfähigkeit des Kohlenwasserstoffes oder des Gemisches von Kohlenwasserstoffen erhöhenden Substanz gemäß Ansprüche 1-15.

Als Magnesiumalkoholat können Verbindungen der Formel Mg(OR¹)₂ oder MgHal(OR¹) eingesetzt werden, worin Hal ein Halogenatom ist, vorzugsweise Chlor, R¹ einen einwertigen aliphatischen, cycloaliphatischen, aromatischen oder araliphatischen Rest bedeutet, vorzugsweise einen Alkylrest mit ein bis sechs Kohlenstoffatomen; oder es können Komplexverbindungen eingesetzt werden, die neben Resten der oben definierten Formel OR¹ und Magnesium mindestens ein Metall der 1. bis 4. Hauptgruppe des Periodensystems enthalten. Beispiele für derartige komplexe Magnesiumalkoholate sind in der EP-A-68,257 zu finden.

Als Titan-IV-halogenid können Verbindungen der Formel Ti(Hal)₄ oder der Formel Ti(Hal)ₐ(OR¹)₄₋ₐ eingesetzt werden, worin Hal und R¹ die oben definierte Bedeutung besitzen und a eine ganze Zahl von 1 bis 3 darstellt.

Bei den erfindungsgemäß zu polymerisierenden Olefinen handelt es sich in der Regel um α-Olefine. Beispiele dafür sind Ethylen, Propylen, But-1-en, Pent-1-en und Hex-1-en. Bevorzugt werden Propylen und insbesondere Ethylen. Neben Homopolymeren sind auch Copolymere aus mindestens zwei Olefinen erfasst, beispielsweise Ethylen-Propylen-Copolymere oder Ethylen- bzw. Propylencopolymere mit höheren α-Olefinen, wie Pent-1-en.

Besonders bevorzugt wird Ethylen eingesetzt und es werden Ethylenhomopolymere mit ultrahohem Molekulargewicht hergestellt. Darunter werden lineare Polyethylene mit viskosimetrisch gemessenen mittleren Molmassen von mindestens 10⁵ g/mol verstanden. Die Bestimmung der Molmassen erfolgt aus der Lösungsviskosität nach der Margolies-Gleichung (beschrieben in CZ Chemie Technik 4 (1974) 129ff).

Aufgrund der besonderen mechanischen Eigenschaften, wie dem hohen Verschleißwiderstand und ausgezeichnetes Zähigkeitsverhalten, nimmt der Werkstoff eine besondere Stellung ein. Er findet vielfältige Verwendung in der Textil-, der chemischen Industrie, sowie dem Maschinen- und Bergbau.

Die erfindungsgemäß eingesetzten Katalysatoren gestatten die Herstellung von Olefinpolymerpulvem mit einstellbarer Schüttdichte. Vorzugsweise werden Polyolefine mit einer Schüttdichte von 350 bis 550g/l erzeugt.

Das erfindungsgemäße Verfahren stellt eine Niederdruckpolymerisation in flüssiger Phase dar. Vorzugsweise wird die Polymerisation in Supension in einer oder mehreren Stufen kontinuierlich oder diskontinuierlich bei Temperaturen von 30 bis 130°C, vorzugsweise 50 bis 90°C, insbesondere 65 bis 90°C und bei einem Partialdruck des zu polymerisierenden Monomers von weniger als 4,0 MPa, bevorzugt 0,01 bis 2 MPa besonders bevorzugt 0,05 bis 1,0 MPa und ganz besonders bevorzugt 0,05 bis 0,6 MPa ausgeführt.

Die Polymerisation kann beispielsweise in Rührbehältern oder in Schleifenreaktoren ("loop reactor") erfolgen.

Es ist überraschenderweise nicht notwendig, dass die Reaktorwände besonders glatt sind. So lassen sich auch mit Reaktoren, deren Wände eine Rauhtiefe (ermittelt nach DIN 7 182) von 3 µm oder größer aufweisen, gute Ergebnisse erzielen.

Als Dispersionsmittel oder gegebenenfalls Lösungsmittel für die gebildeten Polymerteilchen, den Katalysator sowie gegebenenfalls die Monomeren, kommen Kohlenwasserstoffe oder deren Gemische zum Einsatz.

Beispiele dafür sind aliphatische oder cycloaliphatische Kohlenwasserstoffe, wie Butan, Pentan, Hexan, Heptan, Isooctan, deren höhere Homologe oder hydrierte Destillatfraktionen, welche sorgfältig von Sauerstoff, Schwefelverbindungen oder Feuchtigkeit befreit worden sind. Bevorzugt verwendet man aliphatische Kohlenwasserstoffe oder deren Gemische.

Bei den Kohlenwasserstoffen handelt es sich um elektrische Isolatoren.

Es hat sich gezeigt, dass der Zusatz einer die elektrische Leitfähigkeit des Kohlenwasserstoffes erhöhenden Substanz die Tendenz zur Agglomeratbildung der Polymerteilchen und der Ablagerung an den Reaktorwänden verringert, ohne dass dadurch die Aktivität des Katalysators beeinträchtigt wird.

Die Substanz ist dabei in einer solchen Menge einzusetzen, dass eine Erhöhung der elektrischen Leitfähigkeit des Kohlenwasserstoffes eintritt. Neben polyionischen Verbindungen, die in dem Kohlenwasserstoff löslich sind können auch Substanzen zum Einsatz kommen, die mit Komponenten des Reaktionsgemisches reagieren, beispielsweise mit Katalysatorbestandteilen, und dadurch eine Erhöhung der elektrischen Leitfähigkeit bewirken. Bei Überdosierung von Zusätzen kann allerdings der gegenteilige Effekt auftreten und es können sich in dem Kohlenwasserstoff unlösliche Verbindungen bilden, die den gewünschten Effekt zunichte machen und die Bildung fest anhaftender Wandbeläge fördern.

Bevorzugte Substanzen sind Sauerstoff, in dem Kohlenwasserstoff lösliche protische Verbindungen, wie Wasser, Alkohole, Carbonsäuren, Sulfonsäuren oder Mineralsäuren, und in dem Kohlenwasserstoff lösliche polyionischen Verbindungen, wie polymere Polyamine. Diese letzteren Verbindungen sind in Kombination mit Polysulfonen unter der Bezeichnung Stadis (Octel) im Handel.

Die die elektrische Leitfähigkeit des Kohlenwasserstoffes erhöhenden Substanzen können vor dem Eintritt in den Reaktor dem aluminiumorganische Verbindungen enthaltenden Kohlenwasserstoff (Dispergiermittel) zugesetzt werden. Dadurch kann die Belagbildung effizient vermindert werden. Es können Substanzen zur Anwendung kommen, die im verwendeten Dispergiermittel löslich sind und die in der Lage sind elektrische Ladungen abzuleiten.

Vorteilhafterweise läßt sich die Leitfähigkeit und damit der Abbau der elektrostatischen Ladungen in einem breiten Bereich gezielt steuern, ohne die Katalysatoraktivität zu beeinträchtigen. Hierzu können Substanzen verwendet werden, die einen Teil der aluminiumorganischen Verbindungen zu löslichen, ionischen Komponenten umsetzen.

Beispiele sind Luftsauerstoff, oder protische Komponenten, wie Wasser, Alkohole, Carbonsäuren oder analoge Substanzen.

Bis zu einem Verhältnis [Luftsauerstoff bzw. protische Komponente/Al] [Mol/Mol] von bis zu 0,15 entstehen üblicherweise lösliche metallorganische Verbindungen, die die elektrische Leitfähigkeit der Lösung erhöhen.

Bei höherer Dosierung von Luftsauerstoff bzw. protischer Komponente können schwerlösliche Komponenten entstehen, so daß die Leitfähigkeit schließlich wieder abfällt und sich der gewünschte Effekt nicht einstellt. Die schwerlöslichen Komponenten können zu einem unerwünschten Aufbau von fest anhaftenden Wandbelägen führen.

Die elektrische Leitfähigkeit des Dispergiermittels kann mit Hilfe dieses Verfahrens daher nur um einen bestimmten Wert erhöht werden und ist zudem vom Gehalt an aluminiumorganischer Verbindung abhängig.

Die Katalysatoraktivität beim Einbau von Luftsauerstoff bzw. protischen Komponenten wird bei höheren Mengen dieser Substanzen erheblich beeinträchtigt, so daß der Polymerisationsprozeß kaum gesteuert werden kann. Aufgrund dieser Nachteile besten daher das Ziel, grössere Mengen derartiger Substanzen aus dem System fernzuhalten.

Bevorzugt werden die Antistatika Stadis 450, sowie insbesondere Stadis 425 verwendet. Es handelt sich hierbei um eine Lösung von Polyaminen, Polysulfonen und einer Sulfonsäure in einem Lösemittelgemisch aus Isopropanol, Toluol und höhersiedenden aromatischen Kohlenwasserstoffen (DE-A-2,548,416, US-A-3,917,466). Der Wirkstoffanteil liegt bei etwa 15 Gew% für Stadis 425. Die Wirksubstanzen der Komponente Stadis 425 werden dem Dispergiermittel in einem Konzentrationsbereich von 0,1 bis 50 ppm, insbesondere 0,2 bis 10 ppm, bevorzugt 0,3 bis 5 ppm, zugesetzt.

Als besonderer Vorteil des bevorzugten Verfahrens erweist sich, daß sowohl die Katalysatoraktivität (hier als reduzierte Katalysatorraumzeitausbeute [kgPE 1 mMolTi x h x bar], als auch die Polymereigenschaften unbeeinflußt von der Dosiermenge bleiben. Dies ist von besonderer Bedeutung, wenn die Aluminumalkylkonzentration im Prozeß sehr gering ist und dadurch eine hohe Empfindlichkeit gegenüber Störeinflüssen von außen gegeben ist.

So bleibt eine Konzentration von bis zu 30ppm Stadis 425 ohne jeglichen Einfluß auf die Katalysatoraktivität. Während Stadis 450 die Katalysatoraktivität schon bei einer Konzentration von 25ppm/l um ca. 25% beeinträchtigen kann.

Die Dosiermenge des leitfähigkeitserhöhenden Zusatzes kann im kontinuierlichen Polymerisationsbetrieb über den Verlauf des Wärmedurchgangswiderstands und/oder die elektrische Leitfähigkeit des Dispergiermittels gesteuert werden.

Die Möglichkeit der hohen Dosierung, ohne den Katalysator zu beeinflussen, ermöglicht den Einsatz schnell laufender Zentrifugen zur ökonomischen Abtrennung der Polymeren.

Der erfindungsgemäß eingesetzte Katalysator ist ein Mischkatalysator, der Titan in den Wertigkeitskeitsstufen vier und drei enthält sowie eine organische Aluminiumverbindung. Das molare Verhältnis von TI(IV) zu Ti(III) beträgt dabei 100:1 bis 1:100.

Derartige Mischkatalysatoren sind aus der EP-A-0,068,257 für die Herstellung von Polyolefinen, wie Polyethylen, bekannt.

Die Herstellung des erfindungsgemäß eingesetzten Mischkatalysatoren kann nach dem in dieser Schrift beschriebenen Verfahren erfolgen.

So wird im ersten Schritt die Titankomponente des Mischkatalysators nach EP-A-0,068,257 aus einem Magnesiumalkoholat und Titantetrahalogenid, wie TiCl₄, hergestellt. Dieser Katalysator wird mit einer aluminiumorganischen Verbindung voraktiviert, Dabei erfolgt die Umsetzung der Ti(IV)- zur Ti(III)-Komponente [erfolgt] und das Verhältnis von Ti(IV) zu Ti(III) wird erfindungsgemäß eingestellt.

Vorzugsweise erfolgt die Voraktivierung mit Trimethylaluminium, Triethylaluminium oder Tripropylaluminium unter teilweiser Umsetzung der Ti(IV)- zur Ti(III)-Komponente, wobei das molare Verhältnis von Ti(IV) zu Ti(III)) 1,5:1 bis 10:1, inbesondere 2,0:1 bis 3,0:1 vorzugsweise 2,6:1 beträgt. Ganz besonders bevorzugt wird Triethylaluminium als aluminiumorganische Komponente verwendet.

Im Gegensatz zur Lehre der EP-A-0 107 127 ist es nicht erforderlich, dass der Mischkatalysator nur einen geringen Feinkornanteil aufweist. Typischerweise beträgt der Anteil von Feinkorn unterhalb von 2µm beim erfindungsgemäß eingesetzten Katalysator 12 bis 80 Gew.%, bezogen auf die Gesamtmenge an Katalysator.

Nachstehend wird die Herstellung eines erfindungsgemäß bevorzugt einzusetzenden Mischkatalysators im einzelnen beschrieben.

Die Umsetzung von Magnesiumethylat mit Titantetrachlorid erfolgt im Molverhältnis 1 : 0,5 bis 1 : 4, bevorzugt 1 : 1 bis 1 : 3, insbesondere 1 : 1,5 bis 1 : 2,5 in einem aliphatischen Kohlenwasserstoff. Die Reaktionstemperatur beträgt 50-100°C, bevorzugt 60-95°C, insbesondere 80-90°C. Nach einer Reaktionszeit von 4 bis 10 Stunden, insbesondere 5 bis 8 Stunden wird die Temperatur auf 100 bis 200°C insbesondere 110 bis 140°C erhöht.

Nach 40 bis 100 Stunden, insbesondere 50 bis 80 Stunden, wird die Suspension auf eine Temperatur von 60 bis 80°C abgekühlt, dekantiert und mehrfach gewaschen.

Zur Einstellung des gewünschten Voraktivierungsgrades, beispielsweise von 10 bis 40% Ti(III), vorzugsweise 15 bis 35 % Ti(III), wird der Katalysatorfeststoff mit einer aluminumorganischen Verbindung umgesetzt.

Bevorzugt eingesetzte aluminiumorganische Verbindungen entsprechen der allgemeinen Formel AIR₃₋ₘ²Xₘ, Dabei bedeuten m 0, 1 oder 2; R² gleiche oder auch unterschiedliche Alkylreste mit 1 bis 12, insbesondere 2 bis 6 Kohlenstoffatomen; X Halogen, insbesondere Chlor oder Brom.

Beispiele für aluminiumorganische Verbindungen sind Triethylaluminium, Tributylaluminium, Triisobutylaluminium, Trihexylaluminium, Trioctylaluminium, Ethylaluminiumsesquichlorid, Ethylaluminiumdichlorid, Düsobutylaluminiumchlorid, Isobutylaluminiumdichlorid, Diethylaluminiumiodid, Diisobutylaluminiumhydrid, Diethylaluminiumethoxid, Isoprenylaluminium (vorzugsweise 70%ig in Hexan), Dimethylaluminiumchlorid und Diethylaluminiumchlorid. Die aluminiumorganischen Verbindungen können in reiner Form oder auch als Gemisch verwendet werden.

Vorzugsweise wird Triethylaluminium im molaren Verhältnis zu Titan von 0,05 : 1 bis 0,2 : 1, bevorzugt 0,07 : 1 bis 0,17 : 1, insbesondere 0,1 : 1 bis 0,15 eingesetzt.

Die Reaktion wird bei 50 - 120°C, insbesondere 60 -110°C, bevorzugt 70 -100°C durchgeführt. Abschließend wird der Katalysator abdekantiert.

Insbesondere ein mit Triethylaluminium ("TEA") voraktivierter Katalysator zeigt eine signifikant geringere Neigung zur Belagbildung.

Durch diese Vorgehensweise wird der Voraktivierungsgrad für eine längere Lagerdauer stabil eingestellt, was die Einstellung größerer Ansätze und die Einstellung reproduzierbarer Produktionsbedingungen über eine lange Zeit hinweg erlaubt. Der resultierende Feststoff wird in einen kontinuierlich betriebenen Rührreaktor dosiert.

Als Dispergiermittel für den Mischkatalysator wird ein Kohlenwasserstoff(gemisch) verwendet. Es können die gleichen Kohlenwasserstoffe wie die bei der Durchführung der Polymerisation verwendeten Kohlenwasserstoffe zum Einsatz kommen. Beispiele dafür sind weiter oben aufgeführt.

Zur Aktivierung des voraktivierten Katalysators wird dem Dispergiermittel eine aluminiumorganische Verbindung zugesetzt. Beispiele für derartige Verbindungen sind weiter oben bei der Beschreibung der Voraktivierung gegeben.

Vorzugsweise werden Triisobutylaluminium oder Isoprenylaluminium verwendet, deren Verwendung die Herstellung von Polymeren in einem sehr breiten Molmassenbereich erlaubt.

Die Konzentration der aluminiumorganischen Komponente beträgt vorzugsweise 5x10⁻⁶ bis 5x10⁻⁴, insbesondere 1x10⁻⁵ bis 4x10⁻⁴, bevorzugt 2x10⁻⁵ bis 2x10⁻⁴ MolAl/l.

Voraktivierte Mischkatalysatoren, die mit relativ geringen Mengen an aluminiumorganischen Verbindungen aktiviert werden, sind bislang nicht beschrieben und zeichnen sich durch eine erheblich gesteigerte Aktivität aus.

Die Erfindung betrifft daher auch einen auf Magnesiumverbindungen geträgerten und mit einer in einem Kohlenwasserstoff(gemisch) dispergierten organischen Aluminiumverbindung voraktivierten Mischkatalysator zur Polymerisation von Olefinen in inerten Lösungsmitteln,-der Titan in der Wertigkeitskeitsstufe vier und drei enthält, wobei das molare Verhältnis von Ti(IV) zu Ti(III) 100:1 bis 1:100, vorzugsweise 10:1 bis 1:1 und ganz besonders bevorzugt 10:1 bis 2:1 beträgt und wobei der voraktivierte Mischkatalysator durch Zusatz von weniger als 0,2 mmol/l, insbesondere weniger als 0,1 mmol/l und ganz besonders bevorzugt zwischen 0,005 und 0,09 mmol/l, bezogen auf das Volumen an Kohlenwasserstoff, einer Alkylaluminiumverbindung aktiviert worden ist.

Der geringe Gehalt an Alkylaluminiumverbindungen ermöglicht die Herstellung von Polymeren bis in den Bereich höchster Molmassen hinein, wodurch die Empfindlichkeit des Systems wiederum ansteigt. Die Forderung an Zusätze, einen geringen Störeinfluß auszuüben, wird dabei besonders essentiell.

In einem Kohlenwasserstoff, kann dieser Katalysatorfeststoff mit einer aluminiumorganischen Verbindung, deren Konzentration bevorzugt 10⁻⁵ bis 10⁻⁴ Mol Al/l oder besonders bevorzugt 2x10⁻⁵ bis 10⁻⁴ Mol Al/l beträgt zur Polymerisation von Propylen oder insbesondere von Ethylen eingesetzt werden.

Bevorzugt handelt es sich bei dem erfindungsgemäß eingesetzten Mischkatalysator um einen geträgerten Katalysator. Als Trägermaterialien kommen insbesondere Magnesiumverbindungen in Frage.

Bevorzugt eingesetzte Mischkatalysatoren sind erhältlich durch Umsetzung von Magnesiumalkoholat mit Titantetrahalogenid im Molverhältnis 1 : 0,5 bis 1 : 4 in einem aliphatischen Kohlenwasserstoff und anschließender Voraktivierung mit einer aluminiumorganischen Verbindung, wobei eine teilweise Umsetzung der Ti(IV)- zur Ti(III)-Komponente erfolgt und das molare Verhältnis von Ti(IV) zu Ti(III) 10:1 bis 1:1 beträgt.

Der erfindungsgemäß eingesetzte Mischkatalysator kommt üblicherweise in einer Konzentration von 5*10⁻⁶ bis 3*10⁻³ Mol/l zum Einsatz.

Die Bildung einer auf der Reaktorwand fest anhaftenden Polymerschicht kann zusätzlich unterdrückt werden, indem insbesondere der Kohlenwasserstoff sorgfältig von Luft- und Feuchtigkeitsspuren befreit wird. Hierzu kann der Kohlenwasserstoff destillativ sowie adsorptiv gereinigt werden und dabei mit Stickstoff gesättigt werden.

Die intensive Reinigung des Dispergiermittels ist gegebenenfalls auch notwendig, um Nebenprodukte aus dem Dispergiermittelkreislauf zu entfernen, die als Katalysatorgift wirken. Ein derartiges Erfordernis bestehtoinsbesondere, wenn die Produktfolge den Einsatz verschiedenartiger, unverträglicher Katalysatoren in einer Anlage erforderlich macht. In diesen Fällen ist eine reproduzierbar gute Dispergiermittelqualität essentiell und kann auf diese Weise sichergestellt werden.

Es hat sich allerdings gezeigt, dass in einer derart gereinigten Flüssigkeit elektrostatische Aufladungen nicht nur stark verlangsamt abgebaut werden, sondern sich über einen mehrtägigen, kontinuierlichen Produktionslauf sogar wieder verstärken können. Dies geschieht insbesondere auch dadurch, daß der im Kreislauf geführte Kohlenwasserstoff mit einer hohen Geschwindigkeit durch das System geführt wird. Folglich lagern sich Polymerpartikel aufgrund elektrostatischer Wechselwirkung an der Reaktorwand ab.

Als Abhilfe werden erfindungsgemäß dem Kohlenwasserstoff, insbesondere dem vorher gereinigten Kohlenwasserstoff, Substanzen in einer solchen Menge gezielt zugesetzt, so dass elektrostatische Aufladung des Polymeren unterdrückt wird.

Das neue Verfahren ermöglicht die ununterbrochene, kontinuierliche Produktion von hochmolekularen Polyolefinen, insbesondere von hochzähem UHMW-PE, über einen mehrmonatigen Zeitraum, ohne daß es sowohl infolge von polaren Verunreinigungen oder infolge von Lufteintritt zur Ausbildung fester Reaktorwandbeläge oder Agglomerate kommt, als auch temporäre Wandbeläge infolge elektrostatischer Wechselwirkungen vermieden werden. Der Wärmeübergang und damit auch die Produktivität können dadurch erheblich verbessert werden.

Produkteigenschaften, wie die Molmasse des Polymeren, lassen sich dadurch über einen langen Zeitraum in einer sehr engen Bandbreite gezielt einstellen. Die Konzentration des Zusatzes kann in weiten Bereichen variiert werden, ohne daß die Aktivität des Katalysators oder der Polymereigenschaften, wie Farbe, Geruch, Kerbschlagzähigkeit oder Rieselfähigkeit, beeinflußt werden.

Die Molmassen der Polymerisate lassen sich in bekannter Weise durch Molmassenregler, vorzugsweise durch Wasserstoff, einstellen.

Das Polymerisat kann unter Inertgas vom Dispergiermittel abgetrennt werden und direkt oder gegebenenfalls nach einer Wasserdampfdestillation getrocknet werden.

Besonders bevorzugt werden mit dem erfindungsgemäßen Verfahren pulverförmige Polyethylene hergestellt mit einer viskosimetrisch ermittelten Molmasse von mindestens 10⁵ g/mol einer Schüttdichte nach DIN 53466 von 350 bis 550g/l

Die folgenden Beispiele erläutern die Erfindung ohne diese zu begrenzen.

### Beispiel 1: Herstellung des Basiskatalysators

In eine Suspension von 57g Magnesiumethylat in 0,5 l eines aliphatischen Kohlenwasserstoffs mit einem Siedebereich von 140 bis 170°C (Exxsol D30) wurden innerhalb von 4 Stunden 110 ml Titantetrachlorid gegeben. Anschießend wurde der Ansatz 60 Stunden lang bei 120°C getempert. Der Katalysatoransatz wurde gewaschen, indem 4 mal 250 ml Lösemittel zugegeben und jeweils abgehebert wurden. Bei einer Temperatur von 85°C wurde der Ansatz mit 114g Triethylaluminium umgesetzt und abschließend bei Raumtemperatur dekantiert.

### Beispiel 2: Polymerisationsversuche

Die Polymerisation erfolgte in einer kontinuierlich betriebenen Anlage einstufig unter Rückführung der inerten Flüssigkeit (Dispergiermittel) im geschlossenen Kreislauf. Als Dispergiermittel fungierte ein über Molekularsiebe oder KC-Perlen gereinigter aliphatischer Kohlenwasserstoff mit einem Siedebereich von 140 bis 170°C (Exxsol D30). Als Co-Katalysator wurde Triisobutylaluminium ("TIBA") verwendet, welches dem Dispergiermittel vor dem Eintritt in den Reaktor zugegeben wurde. Die ausgeschleuste PE-Masse enthielt ca. 60 Gew% anhaftendes Dispergiermittel, welches durch Dosierung in den Kreislauf (2/3) und direkt in den Reaktor (1/3) kontinuierlich ergänzt wurde. Beispielhaft genannte Zusätze wurden dem in den Kreislauf fließenden Dispergiermittel zugesetzt. Die Versuchsreihen wurden jeweils mit einem Referenzversuch abgeschlossen, bei dem keine Zusätze dosiert wurden.

Das Verhältnis Dispergiermittel zu Polyethylen betrug ca. 4,8 l/kg. Die Molmasse des Polymeren wurde über den Wasserstoffgehalt in der Gasphase gesteuert.

### Beispiel 2.1: Versuche mit Stadis 425

### 2.1.1. Beeinflussung der Katalysatoraktivität

Die nachfolgende Tabelle gibt die Resultate der Versuche summarisch wieder. Bis zu einer Wirkstoffkonzentration von 30 ppm im Dispergiermittel wurde die Katalysatoraktivität (als reduzierte Katalysatorzeitausbeute (KZAred)) nicht beeinflußt.

Die Referenzversuche wurden vor und nach der Dosierung des Stadis 425 durchgeführt. Zu Beginn und abschließend wurden Versuche ohne jeglichen Zusatz durchgeführt (Versuche R1 und R2). Die in den folgenden Tabellen aufgelisteten
Messungen wurden wird folgt durchgeführt:
Schüttdichte: gemäß DIN 53466
Dehnspannung F 150/10 (DS): gemäß ISO 11542-2

**Tabelle**

| Versuch | Temperatur | Wirkstoff | KZAred | cAIR3 | H2 | Schüttdichte | DS |
|---|---|---|---|---|---|---|---|
| | (°C) | Stadis 425 | (kgPE/mMol | (mMol/l) | (Vol%) | (g/l) | (MPa) |
| | | (ppm/l) | Ti*h*bar %) | | | | |
| R1 | 77 | 0 | 0,20 | 0,14 | 2,6 | 400 | 0,30 |
| 2.1.1. | 80,5 | 4,5 | 0,19 | 0,15 | 2,1 | 411 | 0,29 |
| 2.1.2. | 78 | 15 | 0,21 | 0,17 | 1,8 | 405 | 0,34 |
| 2.1.3. | 77 | 30 | 0,20 | 0,15 | 1,8 | 405 | 0,34 |
| 2.1.4. | 80 | 60 | 0,17 | 0,14 | 1,9 | 415 | 0,35 |
| R2 | 78 | 0 | 0,20 | 0,15 | 1,6 | 400 | 0,30 |

### 2.1.2. Versuche mit Stadis 450

Analog der Versuchsdurchführung 2.1.1. wurde Stadis 450 zugesetzt. Nach Herstellerangaben (Octel) wurde eine Wirkstoffkonzentration von 25% angenommen. Die Versuchsserie wurde mit einem Referenzversuch (R4) ohne Additiveinsatz abgeschlossen.

**Tabelle**

| Versuch | Temp. | Wirkstoff | KZAred | cAIR3 | H2 | Schüttdichte | DS |
|---|---|---|---|---|---|---|---|
| | (°C) | Stadis 450 | (kgPE/mMol | (mMol/l) | (vol%) | (g/l) | (MPa) |
| | | (ppm/l) | Ti*h*bar) | | | | |
| 2.1.2. | 81 | 12 | 0,14 | 0,15 | 1,4 | 400 | 0,31 |
| | 81 | 25 | 0,13 | 0,17 | 1,5 | 400 | 0,38 |
| 2.1.R4 | 79 | 0 | 0,16 | 0,17 | 1,3 | 430 | 0,38 |

### 2.1.3. Beeinflussung der Belagsbildung

Die Versuche wurden analog 2.1.1. bzw. 2.1.2. durchgeführt. Aufgrund einer optimierten Inertisierung mit Stickstoff und destillativ sowie adsorbtiv gereinigten

Dispergiermittels wurde hier mit einer Trüsobutylaluminium-Konzentration von weniger als 0,02 bis 0,08mMol/l gearbeitet.

**Tabelle**

| Versuch | Zusatz | Temperatur- | Laufzeit | Beobachtungen | Durchsatzbe- |
|---|---|---|---|---|---|
| | (Wirkstoff) | schwankungen | [Tage] | nach Öffnen | einträchtigungen |
| | | (°C) | | des Reaktors | |
| 2.2.1. | kein | >3 | 4 | lockerer | > 20% |
| | | | | Wandbelag | |
| 2.2.2. | 7 ppm | > 1,0 | 22 | Agglomerate | > 5% |
| | Ethanol | | | und feste | |
| | | | | Wandbeläge | |
| 2.2.3. | 0,3 bis 2,2 | < 0,5 | > 60 | kein Belag, | keine |
| | ppm Stadis | | | keine | |
| | 425 oder 450 | | | Agglomerate | |

Eine Beeinflussung von physikalischen Eigenschaften durch den Zusatz von Stadis 425, wie der Kerbschlagzähigkeit, der Farbe oder aber auch des Geruchs wurde nicht gefunden.

Im Versuch 2.2.R3. wurde auf die absorptive Reinigung des Dispergiermittels verzichtet.

| Versuch | Lösemittel- | maximale | Beobachtungen | Durchsatzbe- |
|---|---|---|---|---|
| | reinigung | Laufzeit | nach Öffnen | einträchtigungen |
| | | (Tage) | des Reaktors | |
| 2.2.R3. | keine | 40 | Agglomerate | > 10% |
| | | | und dicke, feste | |
| | | | Wandbeläge | |

## Patentansprüche

1. Verfahren zur Herstellung von Olefin-Homo- oder -Copolymeren durch Polymerisation von mindestens einem Olefin in einem Kohlenwasserstoff oder einem Gemisch von Kohlenwasserstoffen in Gegenwart eines Molmassereglers, eines Mischkatalysators, und einer die elektrische Leitfähigkeit des Kohlenwasserstoffes oder des Gemisches von Kohlenwasserstoffen erhöhenden Substanz, die in dem Kohlenwasserstoff oder dem Gemisch von Kohlenwasserstoffen löslich ist oder die mit Komponenten des Mischkatalysators reagiert, wobei der Mischkatalysator durch Umsetzung eines Magnesiumalkoholates mit Titan-lV-halogenid, vorzugsweise mit TiCl₄, erhältlich ist, Titan in der Wertigkeitskeitsstufe vier und drei enthält sowie eine organische Aluminiumverbindung, und wobei das molare Verhältnis von TI(IV) zu Ti(III) 100:1 bis 1:100 beträgt,
**dadurch gekennzeichnet, dass** die die elektrische Leitfähigkeit des Kohlenwasserstoffes oder des Gemisches von Kohlenwasserstoffen erhöhende Substanz ausgewählt wird aus der Gruppe bestehend aus Sauerstoff, aus in dem Kohlenwasserstoff oder dem Gemisch von Kohlenwasserstoffen löslichen protischen Verbindungen und aus in dem Kohlenwasserstoff oder dem Gemisch von Kohlenwasserstoffen löslichen polyionischen Verbindungen,
wobei das Verhältnis [Sauerstoff bzw. protische Komponente/Al] [Mol/Mol] einen Wert von 0,15 nicht überschreitet.

2. Verfahren nach Anspruch 1, **dadurch gekennzeichnet, dass** das molare Verhältnis von TI(IV) zu Ti(III) 10:1 bis 2:1 beträgt.

3. Verfahren nach Anspruch 1, **dadurch gekennzeichnet, dass** das mindestens eine zu polymerisierende Olefin Propylen oder Ethylen oder eine Mischung von Propylen und Ethylen ist.

4. Verfahren nach Anspruch 3, **dadurch gekennzeichnet, dass** das Olefin Ethylen ist.

5. Verfahren nach Anspruch 4, **dadurch gekennzeichnet, dass** die Polymerisation bei Temperaturen von 30 bis 130°C und Partialdrucken des zu polymerisierenden Monomeren von 0,05 bis 0,6 MPa ausgeführt wird.

6. Verfahren nach Anspruch 1, **dadurch gekennzeichnet, dass** die die elektrische Leitfähigkeit des Kohlenwasserstoffes oder des Gemisches von Kohlenwasserstoffen erhöhende Substanz eine Mischung ist, die mindestens ein Polysulfon und mindestens ein polymeres Polyamin enthält.

7. Verfahren nach Anspruch 1, **dadurch gekennzeichnet, dass** die die elektrische Leitfähigkeit des Kohlenwasserstoffes oder des Gemisches von Kohlenwasserstoffen erhöhende Substanz Wasser oder ein Alkohol ist, wobei das molare Verhältnis von Wasser/Aluminium einen Wert von 0,15 nicht überschreitet.

8. Verfahren nach Anspruch 1, **dadurch gekennzeichnet, dass** der Mischkatalysator ein geträgerter Katalysator ist.

9. Verfahren nach Anspruch 1, **dadurch gekennzeichnet, dass** der Mischkatalysator erhältlich ist durch Umsetzung von Magnesiumalkoholat mit Titantetrahalogenid im Molverhältnis 1 : 0,5 bis 1 : 4 in einem aliphatischen Kohlenwasserstoff und anschließender Voraktivierung mit einer aluminiumorganischen Verbindung, wobei eine teilweise Umsetzung der Ti(IV)- zur Ti(III)-Komponente erfolgt und das molare Verhältnis von Ti(IV) zu Ti(III) ) 10:1 bis 1:1 beträgt.

10. Verfahren nach Anspruch 9, **dadurch gekennzeichnet, dass** die Voraktivierung mit Trimethylaluminium, Triethylaluminium oder Tripropylaluminium unter teilweiser Umsetzung der Ti(IV)- zur Ti(III)-Komponente erfolgt und das molare Verhältnis von Ti(IV) zu Ti(III) ) 2,0:1 bis 3,0:1.

11. Verfahren nach Anspruch 8, **dadurch gekennzeichnet, dass** der erhaltene Katalysator zur Polymerisation von Ethylen eingesetzt wird, wobei die Konzentration der aluminiumorganischen Verbindung 10⁻⁵ bis 10**⁻⁴** Mol Al/l

12. Mischkatalysator zur Polymerisation von Olefinen in inerten Lösungsmitteln, der auf Magnesiumverbindungen geträgert ist, der durch Umsetzung eines Magnesiumalkoholates mit Titan-IV-halogenid, vorzugsweise mit TiCl₄, erhältlich_ist, der mit einer in einem Kohlenwasserstoff(gemisch) dispergierten organischen Aluminiumverbindung voraktiviert ist, der Titan in der Wertigkeitsstufe vier und drei enthält, wobei das molare Verhältnis von Ti(IV) zu Ti(III) 1,5:1 bis 10:1 beträgt und wobei der voraktivierte Mischkatalysator durch Zusatz von weniger als 0,2 mmol/l, bezogen auf das Volumen an Kohlenwasserstoff, einer Alkylaluminiumverbindung aktiviert worden ist.

13. Mischkatalysator nach Anspruch 12, **dadurch gekennzeichnet, dass** das molare Verhältnis von Ti(IV) zu Ti(III) 10:1 bis 2:1 beträgt.

14. Mischkatalysator nach Anspruch 12, **dadurch gekennzeichnet, dass** die Alkylaluminiumverbindung ausgewählt wird aus der Gruppe bestehend aus Triethylaluminium, Tributylaluminium, Triisobutylaluminium**,** Trihexylaluminium, Trioctylaluminium, Ethylaluminiumsesquichlorid, Ethylaluminiumdichlorid, Diiso-butylaluminiumchlorid, Isobutylaluminiumdichlorid, Diethylaluminiumiodid, Diiso-butylaluminiumhydrid, Diethylaluminiumethoxid, Isoprenylaluminium, Dimethyl-aluminiumchlorid und Diethylaluminiumchlorid oder aus deren Gemischen.

15. Mischkatalysator nach Anspruch 12, **dadurch gekennzeichnet, dass** die zur Voraktivierung eingesetzte organische Aluminiumverbindung ausgewählt wird aus der Gruppe bestehend aus Trimethylaluminium, Triethylaluminium oder Tripropylaluminium.

## Claims

1. A process for preparing olefin homopolymers or copolymers by polymerization of at least one olefin in a hydrocarbon or a mixture of hydrocarbons in the presence of a molar mass regulator, a mixed catalyst and a substance which increases the electrical conductivity of the hydrocarbon or the mixture of hydrocarbons and is soluble in the hydrocarbon or the mixture of hydrocarbons or which reacts with components of the mixed catalyst, where the mixed catalyst is obtainable by reaction of a magnesium alkoxide with titanium(IV) halide, preferably with TiCl₄, and comprises titanium in the oxidation states four and three and also an organic aluminum compound and the molar ratio of Ti(IV) to Ti(III) is from 100 : 1 to 1 : 100, wherein the substance which increases the electrical conductivity of the hydrocarbon or the mixture of hydrocarbons is selected from the group consisting of oxygen, protic compounds which are soluble in the hydrocarbon or the mixture of hydrocarbons and polyionic compounds which are soluble in the hydrocarbon or the mixture of hydrocarbons, where the ratio [oxygen or protic component/A1] [mol/mol] does not exceed 0.15.

2. The process as claimed in claim 1, wherein the molar ratio of Ti (IV) to Ti (III) is from 10 : 1 to 2 : 1.

3. The process as claimed in claim 1, wherein the at least one olefin to be polymerized is propylene or ethylene or a mixture of propylene and ethylene.

4. The process as claimed in claim 3, wherein the olefin is ethylene.

5. The process as claimed in claim 4, wherein the polymerization is carried out at temperatures of from 30 to 130°C and partial pressures of the monomer to be polymerized of from 0.05 to 0.6 mPa.

6. The process as claimed in claim 1, wherein the substance which increases the electrical conductivity of the hydrocarbon or the mixture of hydrocarbons is a mixture comprising at least one polysulfone and at least one polymeric polyamine.

7. The process as claimed in claim 1, wherein the substance which increases the electrical conductivity of the hydrocarbon or the mixture of hydrocarbons is water or an alcohol, where the molar ratio of water/aluminum does not exceed 0.15.

8. The process as claimed in claim 1, wherein the mixed catalyst is a supported catalyst.

9. The process as claimed in claim 1, wherein the mixed catalyst is obtainable by reaction of magnesium alkoxide with titanium tetrahalide in a molar ratio of from 1 : 0.5 to 1 : 4 in an aliphatic hydrocarbon and subsequent preactivation by means of an organoaluminum compound, with partial conversion of the Ti(IV) component into the Ti(III) component occurring and the molar ratio of Ti(IV) to Ti(III) being from 10 : 1 to 1 : 1.

10. The process as claimed in claim 9, wherein the preactivation is carried out using trimethylaluminum, triethylaluminum or tripropylaluminum with partial conversion of the Ti(IV) component into the Ti(III) component and the molar ratio of Ti(IV) to Ti(III) being from 2.0 : 1 to 3.0 :1.

11. The process as claimed in claim 8, wherein the catalyst obtained is used for the polymerization of ethylene and the concentration of the organoaluminum compound is from 10⁻⁵ to 10⁻⁴ mol of Al/l.

12. A mixed catalyst for the polymerization of olefins in inert solvents, which is supported on magnesium compounds and is obtainable by reaction of a magnesium alkoxide with titanium(IV) halide, preferably TiCl₄, has been preactivated by means of an organic aluminum compound dispersed in a hydrocarbon (mixture) and comprises titanium in the oxidation states four and three, where the molar ratio of Ti(IV) to Ti(III) is from 1.5 : 1 to 10 : 1 and the preactivated mixed catalyst has been activated by addition of less than 0.2 mmol/1, based on the volume of hydrocarbon, of an alkylaluminum compound.

13. A mixed catalyst as claimed in claim 12, wherein the molar ratio of Ti(IV) to Ti(III) is from 10 : 1 to 2 : 1.

14. A mixed catalyst as claimed in claim 12, wherein the alkylaluminum compound is selected from the group consisting of triethylaluminum, tributyl aluminum, triisobutylaluminum, trihexylaluminum, trioctylaluminum, ethylaluminum sesquichloride, ethylaluminum dichloride, diisobutylaluminum chloride, isobutylaluminum dichloride, diethylaluminum iodide, diisobutylaluminum hydride, diethylaluminum ethoxide, isoprenylaluminum, dimethylaluminum chloride and diethylaluminum chloride and mixtures thereof.

15. A mixed catalyst as claimed in claim 12, wherein the organic aluminum compound used for the preactivation is selected from the group consisting of trimethylaluminum, triethylaluminum and tripropylaluminum.

## Revendications

1. Procédé pour la préparation d'homopolymères ou de copolymères d'oléfines par polymérisation d'au moins une oléfine dans un hydrocarbure ou un mélange d'hydrocarbures en présence d'un agent de régulation des masses molaires, d'un catalyseur mixte et d'une substance augmentant la conductibilité électrique de l'hydrocarbure ou du mélange d'hydrocarbures, qui est soluble dans l'hydrocarbure ou dans le mélange d'hydrocarbures ou qui réagit avec les composants du catalyseur mixte, le catalyseur pouvant être obtenu par transformation d'un alcoolate de magnésium avec un halogénure de titane IV, de préférence avec du TiCl₄, contenant du titane à l'étage de valence quatre et trois, ainsi qu'un composé organique d'aluminium et le rapport molaire de Ti(IV) à Ti(III) étant de 100:1 à 1:100, **caractérisé en ce que** la substance augmentant la conductibilité électrique de l'hydrocarbure ou du mélange d'hydrocarbures est choisie dans le groupe constitué par l'oxygène, de composés protiques solubles dans l'hydrocarbure ou le mélange d'hydrocarbures et de composés polyioniques solubles dans l'hydrocarbure ou le mélange d'hydrocarbures, le rapport [oxygène ou composant protique/Al] [mole/mole] ne dépassant pas une valeur de 0,15.

2. Procédé selon la revendication 1, **caractérisé en ce que** le rapport molaire de Ti(IV) à Ti(III) est de 10:1 à 2:1.

3. Procédé selon la revendication 1, **caractérisé en ce que** ladite au moins une oléfine à polymériser est le propylène ou l'éthylène ou un mélange de propylène et d'éthylène.

4. Procédé selon la revendication 3, **caractérisé en ce que** l'oléfine est l'éthylène.

5. Procédé selon la revendication 4, **caractérisé en ce que** la polymérisation est réalisée à des températures de 30 à 130°C et à des pressions partielles du monomère à polymériser de 0,05 à 0,6 MPa.

6. Procédé selon la revendication 1, **caractérisé en ce que** la substance augmentant la conductibilité électrique de l'hydrocarbure ou du mélange d'hydrocarbures est un mélange qui contient au moins une polysulfone et au moins une polyamine polymère.

7. Procédé selon la revendication 1, **caractérisé en ce que** la substance augmentant la conductibilité électrique de l'hydrocarbure ou du mélange d'hydrocarbures est l'eau ou un alcool, le rapport molaire d'eau/aluminium ne dépassant pas une valeur de 0,15.

8. Procédé selon la revendication 1, **caractérisé en ce que** le catalyseur mixte est un catalyseur supporté.

9. Procédé selon la revendication 1, **caractérisé en ce que** le catalyseur mixte peut être obtenu par transformation d'alcoolate de magnésium avec du tétrahalogénure de titane dans un rapport molaire de 1:0,5 à 1:4 dans un hydrocarbure aliphatique et préactivation consécutive avec un composé alumino-organique, où il se produit une transformation partielle du composant Ti (IV) en composant Ti(III) et le rapport molaire de Ti(IV) à Ti(III) est de 10:1 à 1:1.

10. Procédé selon la revendication 9, **caractérisé en ce que** la préactivation est réalisée avec du triméthylaluminium, du triéthylaluminium ou du tripropylaluminium avec une transformation partielle du composant Ti(IV) en composant Ti(III) et le rapport molaire de Ti(IV) à Ti(III) est de 2,0:1 à 3,0:1.

11. Procédé selon la revendication 8, **caractérisé en ce que** le catalyseur obtenu est utilisé pour la polymérisation d'éthylène, la concentration en composant alumino-organique étant de 10⁻⁵ à 10⁻⁴ mole d'Al/l.

12. Catalyseur mixte pour la polymérisation d'oléfines dans des solvants inertes, qui est supporté sur des composés du magnésium, qui peut être obtenu par transformation d'un alcoolate de magnésium avec un halogénure de titane IV, de préférence avec du TiCl₄, qui est préactivé avec un composé organique d'aluminium dispersé dans un (mélange d') hydrocarbure(s), qui contient du titane à l'étage de valence quatre et trois, le rapport molaire de Ti(IV) à Ti(III) étant de 1,5:1 à 10:1 et le catalyseur mixte préactivé ayant été activé par addition de moins de 0,2 mmole/1, par rapport au volume d'hydrocarbure, d'un composé d'alkylaluminium.

13. Catalyseur mixte selon la revendication 12, **caractérisé en ce que** le rapport molaire de Ti(IV) à Ti(III) est de 10:1 à 2:1.

14. Catalyseur mixte selon la revendication 12, **caractérisé en ce que** le composé d'alkylaluminium est choisi dans le groupe constitué par le triéthylaluminium, le tributylaluminium, le triisobutylaluminium, le trihexylaluminium, le trioctylaluminium, le sesquichlorure d'éthylaluminium, le dichlorure d'éthylaluminium, le chlorure de diisobutylaluminium, le dichlorure d'isobutylaluminium, l'iodure de diéthylaluminium, l'hydrure de diisobutylaluminium, l'éthoxyde de diéthylaluminium, l'isoprénylaluminium, le chlorure de diméthylaluminium et le chlorure de diéthylaluminium ou parmi leurs mélanges.

15. Catalyseur mixte selon la revendication 12, **caractérisé en ce que** le composé organique d'aluminium utilisé pour la préactivation est choisi dans le groupe constitué par le triméthylaluminium, le triéthylaluminium ou le tripropylaluminium.
